# EUROPEAN PATENT SPECIFICATION

(11) **EP 2 378 181 B1**
(45) Date of publication and mention of the grant of the patent: **16.10.2019**
(21) Application number: 11161632.2
(22) Date of filing: 08.04.2011
(51) Int. Cl.: F16L 59/153

(54) **Apparatus with a guiding device for hoses and flexible cables**
Vorrichtung mit einer Führungsvorrichtung für Schläuche und flexible Kabel
Dispositif avec un dispositif de guidage de tuyaux ou de câbles flexibles

(30) Priority: 14.04.2010 IT TO20100295
(43) Date of publication of application: 19.10.2011
(73) Proprietor: Soilmec S.p.A., 47522 Cesena (IT)
(72) Inventor: Casadei, Giovanni, 47522 Cesena (IT); Pedrelli, Marco, 47522 Cesena (IT)
(74) Representative: Di Gennaro, Sergio

(56) References cited:
- CA-A1- 2 472 989
- FR-A5- 2 080 208
- GB-A- 1 277 364
- US-A- 1 452 007
- US-A- 3 773 090

## Description

The invention relates to an apparatus as claimed in claim 1.

Excavation methods using drilling fluids for stabilizing the walls of the excavation and for evacuating debris are known.

Equally known are excavation tools in which the excavating members are arranged on a framework which descends into the excavation and breaks the underlying ground. The debris are then suctioned by a pump placed in the same framework, together with the drilling fluid.

All the functions of these tools are commonly carried out by means of hydraulic motors and pressurized oil which is conveyed in flexible hoses. Alternatively, the motors can be electric and the hoses can be replaced by electrical cables.

In all these solutions, a fundamental drawback lies in the weight of the hoses/cables which descend vertically into the excavation and which should be capable of supporting the weight thereof or recovering it when the excavation tool is removed simultaneously winding the hoses/cables.

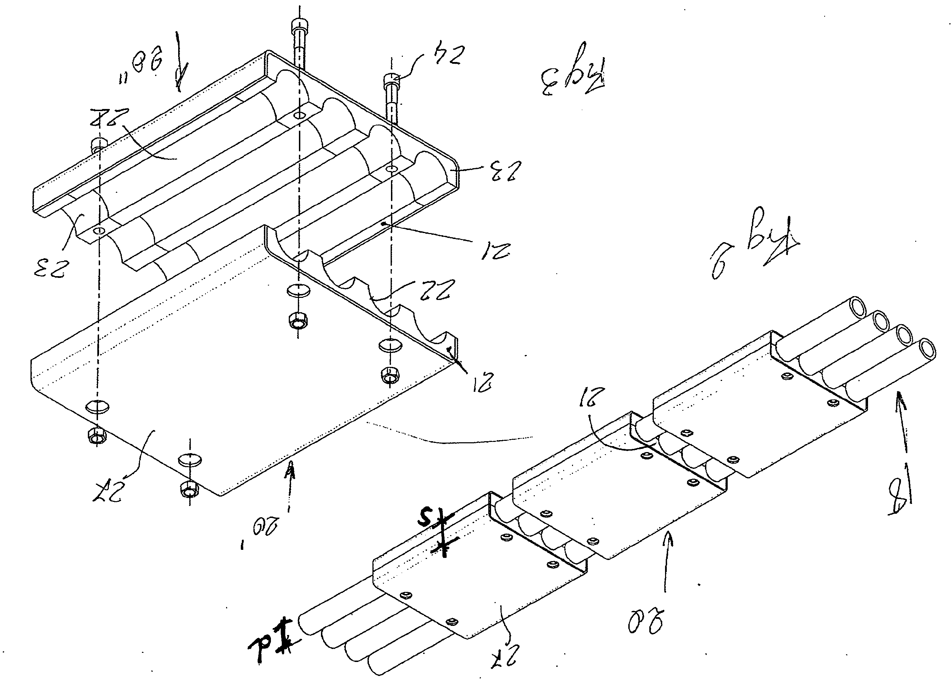

Patent DE3045901A1 shows a device for conveying materials taken from a marine bed, through a flexible suctioning hose which is wound on a vertical axis winder. An object of the present invention is that of ensuring that the hose is not entirely wound on the winder, which is thus small in size, thus leaving the high weight of the hose containing the debris to remain outside with respect thereto and supported by the water. This is obtained by means of a suitably shaped loop which is represented in figure 2 and which allows reaching great depths with an arc shape and a proportionally greater length. In order to confer the floating characteristic, rings are inserted into two halves constituted by an outer casing 26 made of metal or plastic and by an inner filler 27 made of floating foams, in particular polystyrene. Hydraulic supply lines 11 are separated from the hose and they run vertically up to the base in depth, without any floating element connected and they are wound on a drum 12. The entire load is supported by the traction cables 8, also without the floating elements. which are wound on a suitable drum 9 much smaller with respect to the previous one. It is clear that the inventor aimed at increasing the depth storing the additional part of the hose on the sea surface and not on the winder. Furthermore, it is clear that the floating elements are not wound on the winder thus preventing the occurrence of problems related to how these elements can be actually wound maintaining the other characteristics unaltered. On the other hand, traction cables and the flexible hoses are not subjected to a lightening effect also due to the fact that this would lead to the same problems described previously that required to be addressed.

For great depths (beyond 70m - 100m) the mechanical structure of the hoses/cables should be reinforced beyond acceptable limits for the required flexibility thereof and the weights to be moved increase proportionally.

Another problem lies in the relative constraint between the various hoses/cables. The ideal solution is to wind them on a single drum, turn by turn and guide them on pulleys with flat groove bottom. Hence, there arises the need of a system capable of keeping the hoses/cables arranged and fixed parallel to each other to form only one strip with constant thickness.

This solution is advantageous if the aim is that of reducing the diameter dimensions of the drum.

Actually, considering the same length of the hose and the inner winding diameter, the solution is radially more compact as the thickness of the wound elements reduces. This thickness is proportional to the cross-section of the hoses, this dimension being referred to as "d" and it is convenient that the thickness "s" to be wound be comprised between d and twice d.

Alternatively to this first configuration, there is a second configuration in which the hoses are enclosed in circular cross-sectional bundle. In this case, the thickness "s" depends on the hoses present, conventional applications with 10 hoses would reach thicknesses exceeding 4 - 5 times d, hence the winding on the drum would be such to proportionally increase the radial overall dimension. This embodiment favours the small width of the drum to the detriment of a much larger diameter dimension.

Furthermore, it should be considered that the winding mechanism should be proportionally dimensioned to the depth of the excavation and to the resistances of the hoses to traction.

In the prior art, this result is obtained, for example, as described in the patent EP-1 475 344 by using suitably spaced multiple clamps which keep the hoses adjacent parallel to each other among which at least one of them is provided with steel cables adapted to bear the weight of the group of hoses.

In patent EP-1 498 650 the bearing function is carried out by a flexible band, provided with longitudinal reinforcement elements to resist against the traction loads, on which the hoses are fixed adjacent, and which extends over the entire length of the hoses.

Patent EP-0.708.270 describes a metal catenary into which the hoses are inserted and it is provided with steel cables intended to bear the weight of the hoses. Document FR2080208 shows a similar apparatus to that used in the invention.

This invention aims at considerably reducing the tractive forces on the hoses/cables for great depths, hence minimising the winding efforts, but simultaneously guaranteeing the correct mutual constraint between parallel hoses/cables hence allowing keeping them arranged orderly under any operating condition.

Another object of the present invention is that of making the characteristics regarding the sufficient resistance to hydrostatic pressure without excessive reduction of volume compatible, bearing high crushing loads when the elements are wound on the drum countering the elasticity demand of the assembly which should conveniently follow the curvature set by the winding.

Another object is that of making such floating elements non-absorbent with respect to the surrounding liquid.

In order to attain the abovementioned objects, the invention provides for a guiding device for the winding/unwinding flexible hoses and cables on/from drums for ground excavation apparatuses characterised in that at least one floating element adapted to float the assembly in a water-based suspension is associated to the hoses/cables; said element extending substantially over the greater part of the length of the hoses and cables allowing sufficient resistance and elasticity required during the excavation operations.

Now, following is a description of the invention with reference to the attached drawings wherein:
fig 1 is the view of the excavation equipment provided with the device according to the invention;
figs 2 and 3 are respectively the perspective and exploded view of a section of the hoses of the device of Fig 1 provided with the device according to the invention;
figs 4 and 5 are the perspective view of a section of the hose of the device of Fig 1 according to other two different embodiments of the invention;
figs 6 and 7 are a cross-sectional view of a detail of a section of hoses of the device of Fig 1 which are wound on the drum;
figs 8 and 9 show construction details of the device according to the invention.

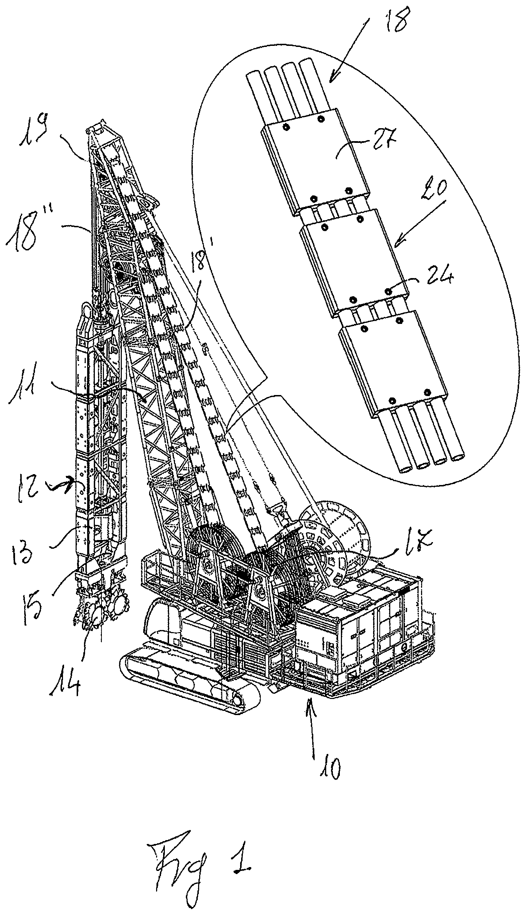

Fig 1 illustrates an excavation apparatus provided with the device according to the invention.

The apparatus consists in a base machine 10 provided with a crane 11 and with an excavation tool 12. The latter will not be described in detail hereinafter given that it is of the known type, i.e. generally constituted by a framework 13, excavating means 14 and pump 15 for sludge or debris that are suctioned and conveyed outside the excavation.

As previously mentioned, this type of apparatus requires a plurality of flexible hydraulic hoses or electrical cables 18 which, starting from pump 15 of excavation tool 12, extend with one or more ascending branches 18'', they are wound around pulleys 19 from the top of crane 11 and continue with one or more descending branches 18' up to drums 17, carried by base machine 10, around which they are unwound.

In the enlarged part of Figure 1 and in figure 2 hoses/cables 18 of the two branches 18' and 18" which are four in the figures but whose number may vary according to the requirement are shown better.

They are made of flexible material and they are held parallel on a plane, suitably spaced, by means of a plurality of advantageously flexible shell-shaped elements 20, regularly spaced over the length of hoses/cables 18 and each constituted by two half-shells 20' and 20'' (see Fig 3).

Each half-shell 20' and 20'' has an outer casing 27, adapted to guarantee shells 20 the required mechanical protection and the possible shielding against the absorption of the surrounding liquid; casings 27 are coated in the inner part by a low density filler material 21, i.e. of the type floating in water, for example rigid PVC foam, alveolar plastic material, closed pores synthetic resin etc.

Advantageously, the filler material can be constituted by spheres made of rigid material.

Actually, the fact of not having a monolithic body but an assembly of many pieces, allows the inner material to modify the shape thereof and follow the curvature of the outer body when the latter is wound on the drum. Furthermore, the sphere could be empty or filled with gas so as to be even lighter.

Filler material 21 is configured so as to create as many parallel housings 22 as hoses/cables 18 to keep them parallel and spaced.

Ends 23 of the two half-shells 20' and 20'' serve as a clamp for fastening the half-shells by means of bolts 24.

It is clear that the half-shells could also be hinged and closed with hooking/unhooking means or fastened together through means different from bolts 24, without departing from the invention concept of the device in any manner whatsoever.

The shape of the shells should be such to maximise the characteristics: the greater the volume the greater the floating thrust and thus the reduction effect on the extraction pull required to lift hoses 18. In order to maximize the volume, with the aim of limiting thickness "s" to a low value (containing the diameter dimensions of the drum) it is advantageous that the extension of shells 20 width-wise incorporates all the hoses, actually holding them therewithin. The structure of the shell could also be opened laterally given that the sections are very small and have little influence on the volume. Still with the aim of maximising, shells 20 should have a considerable longitudinal extension (in the direction of the axis of hoses 18) occupying this third dimension to the maximum. Advantageously, in order to simplify the fastening of the elements the extension can be increased length-wise so as to reduce the preparation times of the containment elements.

The basic characteristic of this first embodiment lies in the fact that the materials shell 20 (26 and 27) is made of are such to provide sufficient resistance against crushing loads and suitable elasticity so as to be deformed and achieve an ideal deformed configuration, when wound in the drum.

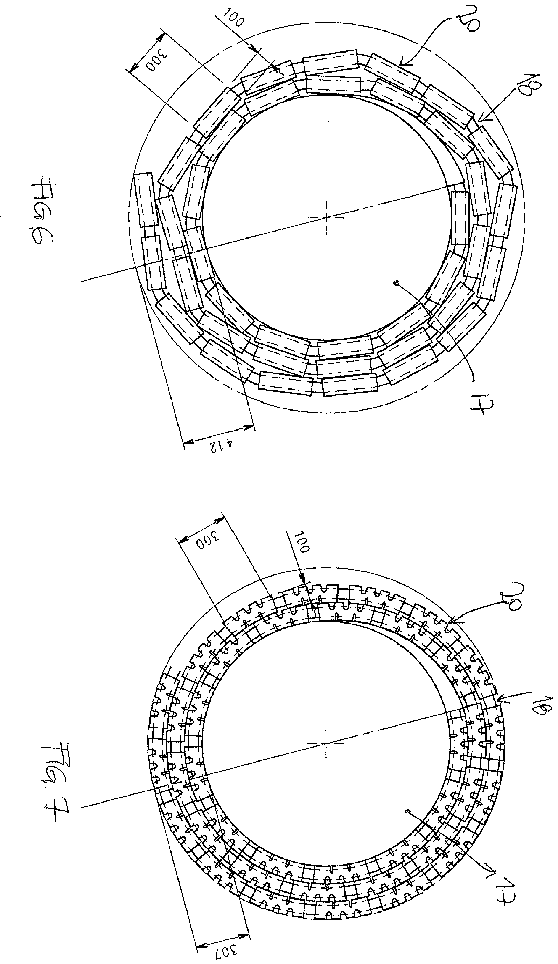

Figs 6 and 7 show the problem and the solution proposed in case the structures of shell 20 are of the elastic type. Fig 6 shows a section of the winding drum (generally the minimum inner diameter is related to the minimum curvature admissible by the hoses, equivalent to about 1 - 1.5 m) in which several layers of hoses 18 are wound, guided and supported by shells 20. Should these shells not have the suitable elastic properties, then they will be arranged tangentially to the innermost support circumference and they will identify a broken section. This geometric shape introduces two problems: the first regards the punctiform contact between two adjacent layers and thus the high concentration of specific pressure to transfer the high pulling loads, the second reveals how the irregular arrangement implies great loss of space and an increase of the radial dimensions of the drum.

Vice versa Fig 7 shows a shell 20, flexible or made of rigid material due to consistency, but made flexible due to a specific geometric shape in which there are provided areas with lower resistance (for example notches, grooves, local resistance variations of the base material) which facilitate the curvature of the body. In this case, it is clear how the arrangement of the wound elements, hoses 18 with shells 20, is more uniform, without cusps which concentrate specific high pressures and which can bend up to breaking the shells and saving most space possible.

The floating material could be compact so as not to require the use of an outer casing 27, like it is instead illustrated in figures 2 and 3, but it could be self-supporting and capable of resisting against mechanical stresses.

In this case the two half-shells 20' and 20'' could be constituted solely by said floating material, which could however bear end clamps 23 embedded; or the two half-shells could be assembled in another manner, for example through hooks, snap systems etc.

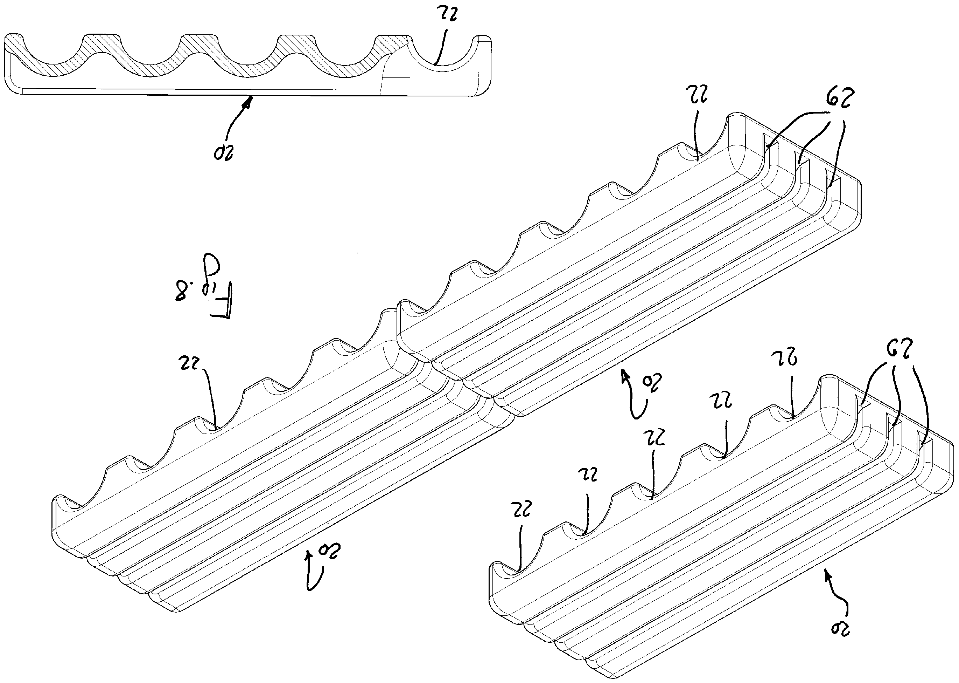

A further variant of this embodiment is illustrated in figure 8 in which there is represented one of the halves of the shells 20, made of light homogeneous material whose density is much lower than that of the embedding liquid, the material being sufficiently rigid and resistant to bear the workloads as well as non-absorbent; such material - though being rigid according to the characteristics required previously - is made flexible due to the particular geometric shape thereof. Floating shells 20 are made of rigid material but provided with a geometric shape weakened at outermost peripheral and possibly at the innermost peripheral, such to allow the bending of the shell in the longitudinal direction due to the different rigidity produced by the shape. The figure shows grooves 29 (cavities or recesses) which externally follow the flat shape and internally envelope the inner shaped surface and which allow bending thereof in the direction transverse to that of the incisions.

Thus, shell 20 is made flexible even though it is made of consistent and rigid material. Fig 8 does not show the systems for fastening the two halves, due to the fact that they can be obtained as described previously.

In a different embodiment, clamps 23 can be objects separated and mounted on hoses/cables 18 alternated with shells 20 which shall be without them in this case; thus, clamps 23 will prevent the inadvertent sliding of shells 20 along hoses/cables 18.

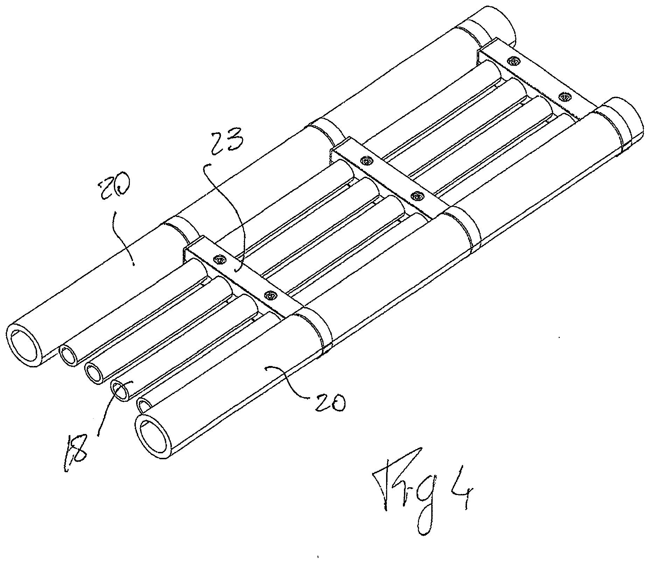

In a further embodiment (Fig 4) there could be two elements 20 (hoses) or one central element (not illustrated) which extend over the entire length of hoses/cables 18 without interruption; in this case, the element or elements 20 could consist in empty hoses or hoses filled with air or gas or filled with floating material 21 with a floating volume sufficient to support the entirety.

Clamps 23 would have the task of keeping hoses/cables 18 spaced from each other and also keeping the floating element or elements 20 integral thereto.

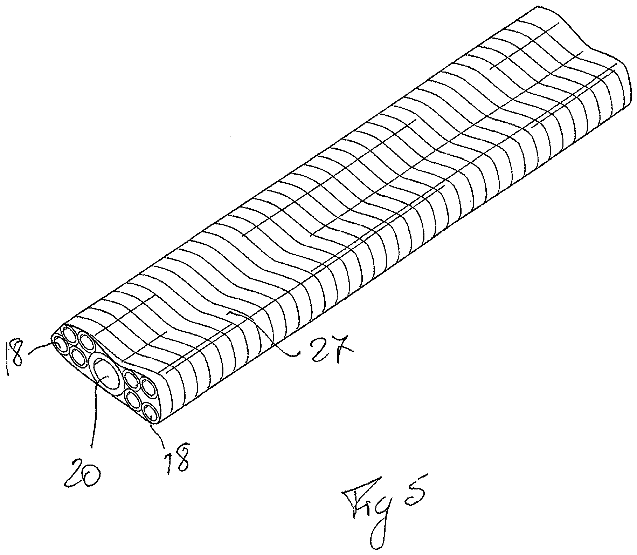

In a further different embodiment (Fig 5) in which element 20 could be only one and extended over the entire length of hoses/cables 18 without interruption, empty or filled with air or gas or filled with floating material 21; hoses/cables 18 and element 20 could be gathered in a casing 27, constituted by an external band or two long half-shells 20' and 20" (not illustrated) or by a plurality of the half-shells joined together at the ends where clamps 23 could be provided for like in the case of the half-shells of figures 2 and 3.

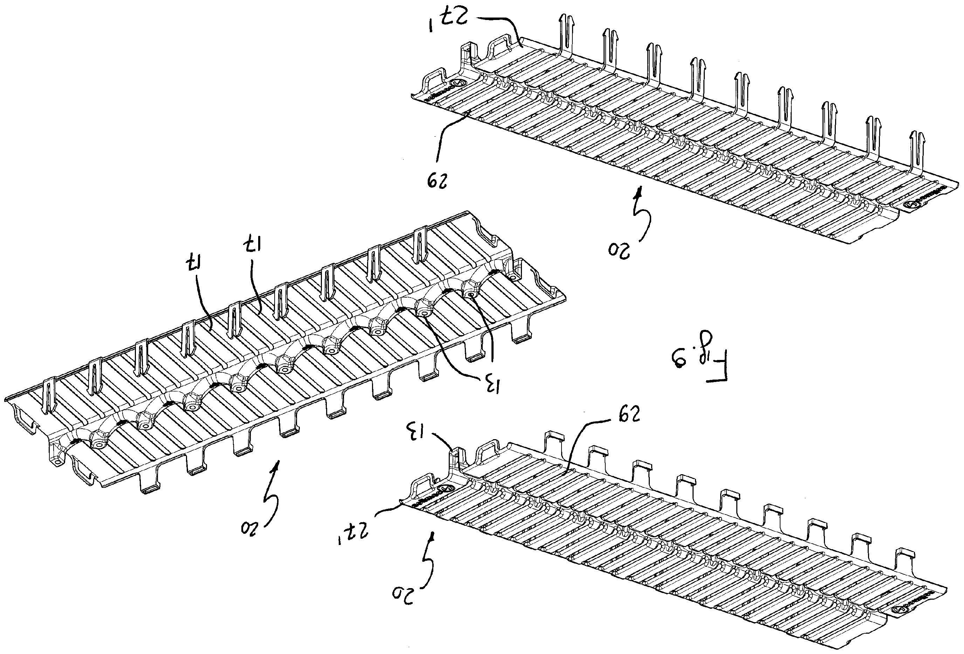

Fig 9 shows a further embodiment in which the outer resistant shell is supported by the floating material and identifies an inner shell, comprised between hoses 18 and the perimeter surface thereof, which can be occupied by the light filler. Such filler, not illustrated, conveniently occupies the entire available space with an elaborate shape, and it is provided with a geometric shape with grooves arranged on the periphery, so as so as to make the structure thereof flexible and deformable according to the direction of winding on drum 17. Due to the reasons illustrated previously, the geometric shape of casing 27' is made flexible with a geometric configuration with notches 29. Alternatively, the same characteristic could be obtained with notches (like in fig 8) or with local variations of resistance (operating on the characteristics of the component material or including air bubbles and void spaces advantageously positioned on the central area in proximity of the outer and inner periphery, capable of making the structure deformable due to the low rigidity areas) with identical behaviour. In this case, the fastening of the two halves of shell 20 is advantageously obtained with suitable elastic clips which do not require the use of spanners and bolts.

The central part is instead made as a crosspiece 13 for connecting hydraulic hoses 18 passing in the different inner cavities.

The turn on turn winding of flexible shells 20 and of hoses 18 - also flexible - guarantees that each hose (as illustrated in figure 7) rests on the previous turn of the pipe, thus preventing the crushing of floating filler material 22.

The crushing force exerted on hoses/cables 18 embedded in the drilling fluids of the excavation will not increase proportionally to the depth like in the current cases, such as those described in the prior art, given that the weight of hoses/cables 18 band is neutralized by the fact that shells 20 tend to float on drilling fluids 26 of the excavation due to the material they are made of or internally coated with.

The advantage on the minimisation of the effort on the winding system is clear. With reference to Figure 1, it can be observed that branches 18' and 18'' of hoses/cables 18 band not subjected to floating have very similar weight and length and thus the winding effort should mainly overcome the frictions.

In case of increase of density of the drilling fluids the floating thrust will increase without creating difficulties to the winding mechanism.

Another advantage is constituted by the fact that due to the floating thrust hoses/cables 18 do not collapse on the bottom of the excavation as it instead occurs in the prior art (in case of failure of the winding system), interfering with excavating members 14 and with potential risks of entrapment and breakage.

On the contrary, loosening will occur, with the collapsing of the band in surface, when the latter is clearly visible by the operators.

Advantageously, the total volume of shells 20 will be sufficient to guarantee the total floating of hoses/cables 18 in a liquid or water-based suspension.

## Claims

1. Apparatus comprising:
- a base machine (10) provided with a crane (11) and at least one drum (17);
- a ground excavation apparatus (12), comprising a pump (15), and provided with excavating means (14);
- a plurality of flexible hoses and/or cables (18) which, starting from the pump (15) of the ground excavation apparatus (12), extend with one or more ascending branches (18", they are wound around pulleys (19) from the top of crane (11) and continue with one or more descending branches (18') up to said at least one drum (17), carried by base machine (10), around which they are unwound;
- at least one guiding device adapted to wind/unwind said flexible hoses and/or cables (18) on/from said at least one drum (17);
said ground excavation apparatus (12) is adapted to descend vertically into the excavation in a water-based drilling fluids used for stabilizing the walls of the excavation;
said hoses and/or cables are adapted to descend vertically into the excavation in the water-based drilling fluids,
said hoses and/or cables are adapted to feed at least one between electric motor and hydraulic motor of said excavating means (14);
said apparatus being **characterized in that**:
- said guiding device comprises a plurality of floating elements (20), associated to said hoses/cables (18), able to reduce the tractive forces on said hoses/cables
- said floating elements (20) being flexible and periodically arranged and spaced extending substantially over the entire length of said hoses and/or cables (18);
- said floating elements (20) are configured so as to provide as many housings (22) as the number of hoses and/or cables (18);
- said floating elements (20) are wound together with said hoses and/or cables (18) on said drum assuming a uniform winding shape.

2. Apparatus according to claim 1 **characterized in that** the elements (20) are constituted by half-shells (20', 20").

3. Apparatus according to claim 2 **characterized in that** the half-shells (20',20") are coated by a casing (27) whose floating material (21) constitutes the inner filler.

4. Apparatus according to claim 3 **characterised in that** the floating material is constituted by spheres made of rigid material.

5. Apparatus according to claim 3 **characterised in that** at least one end (23) of the two half-shells (20', 20") serves as a clamp for fastening the half-shells.

6. Apparatus according to claim 1 **characterised in that** clamps for fastening the hoses/cables (18) are arranged between two adjacent elements (20).

7. Apparatus according to claim 1, **characterised in that** the floating element or elements (20) are hoses held in position by clamps (25) which keep the hoses/cables (18) assembled and spaced.

8. Apparatus according to claim 1, **characterised in that** the floating element or elements (20) are empty hoses or hoses filled with air or gas.

9. Apparatus according to claim 1, **characterised in that** the floating element or elements (20) are hoses filled with floating material (21).

10. Apparatus according to claim 1, **characterised in that** the floating elements (20) are made of rigid material but provided with a geometric shape weakened at the outermost peripheral, such to allow the bending in the longitudinal direction.

11. Apparatus according to claim 10, **characterised in that** flexibility is produced through notches or grooves provided for on the body of such elements.

12. Apparatus according to claim 10, **characterised in that** flexibility is produced through different resistance characteristics in the material constituting the element, or which incorporates cavities for reducing rigidity.

13. Apparatus according to claim 1, **characterised in that** the elements (20) are made of two half-shells joined together by means of clips.

14. Apparatus according to claims 11 and 13, wherein the central area of the outer shell is provided with a hollow area in which the point for holding the hoses, fastening the two halves, is provided.

15. Apparatus according to claim 10, wherein the floating elements are constituted by an outer and flexible containment casing (27) and by a floating filler (21) also flexible.

16. Apparatus according to claim 15, wherein the outer casing (27) has a geometric shape with peripheral areas having weakened rigidity and the filler (21) is provided with grooves on the periphery.

17. Apparatus according to claim 10, **characterised in that** the floating elements (20) are provided with a geometric shape weakened also on the innermost periphery.

18. Apparatus according to claim 3, in which the inner filler is constituted by rigid PVC foam, alveolar plastic material or closed pores synthetic resin.

19. Apparatus according to claim 1, comprising a plurality of clamps (23); said clamps (23) prevent sliding of floating elements (20) along hoses/cables (18), the floating thrust of said floating elements reduces the tractive forces on said hoses/cables.

## Patentansprüche

1. Vorrichtung umfassend:
- eine Basismaschine (10), die mit einem Kran (11) und mindestens einer Trommel (17) bereitgestellt ist;
- eine Bodenaushubvorrichtung (12), die eine Pumpe (15) umfasst und mit Aushubmitteln bereitgestellt ist;
- eine Vielzahl von flexiblen Schläuchen und/oder Kabeln (18), die sich ausgehend von der Pumpe (15) der Bodenaushubvorrichtung (12) mit einem oder mehreren aufsteigenden Abschnitten (18") erstrecken, um Riemenscheiben (19) an der Oberseite des Krans (11) gewickelt sind und mit einem oder mehreren absteigenden Abschnitten (18') bis zu der mindestens einen von der Basismaschine (10) getragenen Trommel (17) fortgesetzt werden, um die sie abgewickelt werden;
- mindestens eine Führungsvorrichtung, die zum Auf- und Abwickeln der flexiblen Schläuche und/oder Kabel (18) auf/von der mindestens einen Trommel (17) eingerichtet ist; wobei
die Bodenaushubvorrichtung (12) eingerichtet ist, um vertikal in den Aushub in eine wasserbasierte Bohrflüssigkeiten einzutauchen, die zum Stabilisieren der Wände des Aushubs eingesetzt wird; wobei
die Schläuche und/oder Kabel eingerichtet sind, um vertikal in den Aushub in die wasserbasierten Bohrflüssigkeiten einzutauchen, wobei die Schläuche und/oder Kabel eingerichtet sind, um zumindest eines zwischen Elektromotor und Hydraulikmotor der Baggereinrichtung (14) zu führen;
wobei die Vorrichtung **dadurch gekennzeichnet ist, dass**:
- die Führungsvorrichtung eine Vielzahl von Schwimmelementen (20) umfasst, die den Schläuchen/Kabeln (18) zugeordnet sind und die in der Lage sind, die Zugkräfte auf die Schläuche/Kabel zu reduzieren,
- die Schwimmelemente (20) flexibel und regelmäßig angeordnet und sich im Wesentlichen über die gesamte Länge der Schläuche und/oder Kabel (18) beabstandet erstrecken;
- die Schwimmelemente (20) eingerichtet sind, dass sie entsprechend der Anzahl der Schläuche und/oder Kabel (18) ebenso viele Gehäuse (22) bereitstellen;
- die Schwimmelemente (20) zusammen mit den Schläuchen und/oder Kabeln (18) auf der Trommel gewickelt sind und eine gleichmäßige Wickelform annehmen.

2. Vorrichtung nach Anspruch 1, **dadurch gekennzeichnet, dass** die Elemente (20) aus Halbschalen (20', 20") gebildet sind.

3. Vorrichtung nach Anspruch 2, **dadurch gekennzeichnet, dass** die Halbschalen (20', 20") mit einem Hüllkörper (27) ummantelt sind, dessen schwimmendes Material (21) den inneren Füllstoff bildet.

4. Vorrichtung nach Anspruch 3, **dadurch gekennzeichnet, dass** das schwimmende Material aus Kugeln aus festem Material besteht.

5. Vorrichtung nach Anspruch 3, **dadurch gekennzeichnet, dass** mindestens ein Ende (23) der beiden Halbschalen (20', 20"') als Klemme zur Befestigung der Halbschalen dient.

6. Vorrichtung nach Anspruch 1, **dadurch gekennzeichnet, dass** zwischen zwei benachbarten Elementen (20) Klemmen zur Befestigung der Schläuche/Kabel (18) angeordnet sind.

7. Vorrichtung nach Anspruch 1, **dadurch gekennzeichnet, dass** das oder die Schwimmelemente (20) Schläuche sind, die von Klemmen (25) in Position gehalten werden, die die Schläuche/Kabel (18) befestigt und beabstandet halten.

8. Vorrichtung nach Anspruch 1, **dadurch gekennzeichnet, dass** das oder die Schwimmelemente (20) leere Schläuche oder mit Luft oder Gas gefüllte Schläuche sind.

9. Vorrichtung nach Anspruch 1, **dadurch gekennzeichnet, dass** das oder die Schwimmelemente (20) Schläuche sind, die mit Schwimmmaterial (21) gefüllt sind.

10. Vorrichtung nach Anspruch 1, **dadurch gekennzeichnet, dass** die Schwimmelemente (20) aus festem Material hergestellt sind, jedoch mit einer geometrischen Form bereitgestellt sind, die am äußersten Umfang geschwächt ist, um das Biegen in Längsrichtung zu erlauben.

11. Vorrichtung nach Anspruch 10, **dadurch gekennzeichnet, dass** eine Flexibilität durch Kerben oder Nuten bereitgestellt wird, die am Körper solcher Elemente vorgesehen sind.

12. Vorrichtung nach Anspruch 10, **dadurch gekennzeichnet, dass** eine Flexibilität durch unterschiedliche Festigkeitseigenschaften in dem das Element bildenden Material bereitgestellt wird, oder das Hohlräume zur Reduzierung der Steifigkeit vorgesehen sind.

13. Vorrichtung nach Anspruch 1, **dadurch gekennzeichnet, dass** die Elemente (20) aus zwei Halbschalen gebildet sind, die mittels Clips miteinander verbunden sind.

14. Vorrichtung nach Ansprüche 11 und 13, wobei der zentrale Bereich der Außenschale mit einem Hohlbereich bereitgestellt ist, in dem die Stelle zum Halten der Schläuche vorgesehen ist, die die beiden Hälften befestigt.

15. Vorrichtung nach Anspruch 10, wobei die Schwimmelemente durch ein äußeres und flexibles Aufnahmegehäuse (27) und durch einen ebenfalls flexiblen schwimmenden Füllstoff (21) gebildet sind.

16. Vorrichtung nach Anspruch 15, wobei das Außengehäuse (27) eine geometrische Form aufweist, wobei Randbereiche eine geschwächte Festigkeit aufweisen und der Füllstoff (21) mit Nuten am Umfang bereitgestellt ist.

17. Vorrichtung nach Anspruch 10, **dadurch gekennzeichnet, dass** die Schwimmelemente (20) mit einer geometrischen Form bereitgestellt sind, die auch am inneren Umfangsbereich geschwächt ist.

18. Vorrichtung nach Anspruch 3, bei der der innere Füllstoff aus Hart-PVC-Schaum, alveolarem Kunststoffmaterial oder geschlossenporigem Kunstharz bereitgestellt ist.

19. Vorrichtung nach Anspruch 1, umfassend eine Vielzahl von Klemmen (23); wobei die Klemmen (23) ein Gleiten der Schwimmelemente (20) entlang der Schläuche/Kabel (18) verhindern, wobei der Schwimmschub der Schwimmelemente die Zugkräfte auf die Schläuche/Kabel reduziert.

## Revendications

1. Appareil comprenant :
- une machine de base (10) pourvue d'une grue (11) et d'au moins un tambour (17) ;
- un appareil d'excavation de sol (12), comprenant une pompe (15), et pourvu de moyens d'excavation (14) ;
- une pluralité de tuyaux flexibles et/ou de câbles (18) qui, à partir de la pompe (15) de l'appareil d'excavation de sol (12), s'étendent avec une ou plusieurs branches ascendantes (18''), sont enroulés autour de poulies (19) depuis le sommet de la grue (11) et continuent avec une ou plusieurs branches descendantes (18') jusqu'audit au moins un tambour (17), porté par la machine de base (10), autour duquel ils sont déroulés ;
- au moins un dispositif de guidage apte à enrouler/dérouler lesdits tuyaux flexibles et/ou câbles (18) sur ledit/dudit au moins un tambour (17) ;
ledit appareil d'excavation de sol (12) est apte à descendre verticalement dans l'excavation dans des fluides de forage à base d'eau utilisés pour stabiliser les parois de l'excavation ;
lesdits tuyaux et/ou câbles sont aptes à descendre verticalement dans l'excavation dans les fluides de forage à base d'eau,
lesdits tuyaux et/ou câbles sont aptes à alimenter au moins l'un d'un moteur électrique et d'un moteur hydraulique desdits moyens d'excavation (14) ;
ledit appareil étant **caractérisé en ce que** :
- ledit dispositif de guidage comprend une pluralité d'éléments de flottaison (20), associés auxdits tuyaux/câbles (18), capables de réduire les forces de traction sur lesdits tuyaux/câbles,
- lesdits éléments de flottaison (20) sont flexibles et périodiquement agencés et espacés en s'étendant sensiblement sur toute la longueur desdits tuyaux et/ou câbles (18) ;
- lesdits éléments de flottaison (20) sont configurés de manière à fournir un nombre de boîtiers (22) égal au nombre de tuyaux et/ou câbles (18) ;
- lesdits éléments de flottaison (20) sont enroulés ensemble avec lesdits tuyaux et/ou câbles (18) sur ledit tambour en prenant une forme d'enroulement uniforme.

2. Appareil selon la revendication 1, **caractérisé en ce que** les éléments (20) sont constitués de demi-coques (20', 20") .

3. Appareil selon la revendication 2, **caractérisé en ce que** les demi-coques (20', 20'') sont enveloppées par un carter (27) dont une matière de flottaison (21) constitue la garniture intérieure.

4. Appareil selon la revendication 3, **caractérisé en ce que** la matière de flottaison est constituée de sphères de matière rigide.

5. Appareil selon la revendication 3, **caractérisé en ce qu'**au moins une extrémité (23) des deux demi-coques (20', 20") sert de crampon pour serrer les demi-coques.

6. Appareil selon la revendication 1, **caractérisé en ce que** des crampons pour serrer les tuyaux/câbles (18) sont agencés entre deux éléments adjacents (20).

7. Appareil selon la revendication 1, **caractérisé en ce que** l'élément ou les éléments de flottaison (20) sont des tuyaux maintenus en position par des crampons (25) qui gardent les tuyaux/câbles (18) assemblés et espacés.

8. Appareil selon la revendication 1, **caractérisé en ce que** l'élément ou les éléments de flottaison (20) sont des tuyaux vides ou des tuyaux remplis d'air ou de gaz.

9. Appareil selon la revendication 1, **caractérisé en ce que** l'élément ou les éléments de flottaison (20) sont des tuyaux remplis d'une matière de flottaison (21).

10. Appareil selon la revendication 1, **caractérisé en ce que** les éléments de flottaison (20) sont constitués d'une matière rigide mais pourvus d'une forme géométrique affaiblie à la périphérie la plus à l'extérieur, de manière à permettre la flexion dans la direction longitudinale.

11. Appareil selon la revendication 10, **caractérisé en ce que** la flexibilité est produite par l'intermédiaire d'encoches ou de rainures prévues sur le corps de tels éléments.

12. Appareil selon la revendication 10, **caractérisé en ce que** la flexibilité est produite par l'intermédiaire de caractéristiques de résistance différentes dans la matière constituant l'élément, ou incorporant des cavités pour réduire une rigidité.

13. Appareil selon la revendication 1, **caractérisé en ce que** les éléments (20) sont constitués de deux demi-coques solidarisées au moyen de pinces.

14. Appareil selon les revendications 11 et 13, dans lequel la zone centrale de la coque extérieure est pourvue d'une zone creuse dans laquelle le point pour maintenir les tuyaux, en serrant les deux moitiés, est prévu.

15. Appareil selon la revendication 10, dans lequel les éléments de flottaison sont constitués par un carter de confinement flexible extérieur (27) et par une garniture de flottaison (21) également flexible.

16. Appareil selon la revendication 15, dans lequel le carter extérieur (27) a une forme géométrique avec des zones périphériques ayant une rigidité affaiblie et la garniture (21) est pourvue de rainures sur la périphérie.

17. Appareil selon la revendication 10, **caractérisé en ce que** les éléments de flottaison (20) sont pourvus d'une forme géométrique affaiblie également sur la périphérie la plus à l'intérieur.

18. Appareil selon la revendication 3, dans lequel la garniture intérieure est constituée d'une mousse de PVC rigide, d'une matière plastique alvéolaire ou d'une résine synthétique à pores fermés.

19. Appareil selon la revendication 1, comprenant une pluralité de crampons (23) ; lesdits crampons (23) empêchant un coulissement d'éléments de flottaison (20) le long de tuyaux/câbles (18), et la poussée de flottaison desdits éléments de flottaison réduisant les forces de traction sur lesdits tuyaux/câbles.
